(19) Europäisches Patentamt
European Patent Office
Office européen des brevets

(11) EP 0 550 879 B1

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(51) Int. Cl.$^6$: **B01D 71/12**

(21) Anmeldenummer: **92121850.9**

(22) Anmeldetag: **23.12.1992**

(54) **Verfahren zum Beschichten cellulosischer Membranen**
Process for coating cellulosic membranes
Procédé pour le revêtement de membranes cellulosiques

(84) Benannte Vertragsstaaten:
**DE FR GB IT NL SE**

(30) Priorität: **07.01.1992 DE 4200162**

(43) Veröffentlichungstag der Anmeldung:
**14.07.1993 Patentblatt 1993/28**

(73) Patentinhaber: **Akzo Nobel N.V.**
**6824 BM Arnhem (NL)**

(72) Erfinder:
- **Diamantoglou, Michael, Dr.**
  **W-8765 Erlenbach/Main (DE)**
- **Richter, Edmund**
  **W-5600 Wuppertal 2 (DE)**
- **Rintelen, Thomas, Dr.**
  **W-5830 Schwelm (DE)**
- **Dünweg, Gustav**
  **W-5600 Wuppertal 2 (DE)**
- **Reiche, Angelika, Dr.**
  **W-5000 Köln 30 (DE)**
- **Tatas, Ralf, Dr.**
  **W-5600 Wuppertal 2 (DE)**

(74) Vertreter: **Fett, Günter et al**
**Akzo Patente GmbH,**
**Postfach 10 01 49**
**42097 Wuppertal (DE)**

(56) Entgegenhaltungen:
**EP-A- 0 330 106**
**EP-A- 0 376 069**
**EP-A- 0 459 293**
**FR-A- 2 089 396**
**FR-A- 2 380 052**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Rank Xerox (UK) Business Services
2.13.16/3.4

**Beschreibung**

Die Erfindung betrifft ein Verfahren zur Verbesserung der Biokompatibilität von cellulosischen Flachmembranen.

Aus der DE-A-27 05 735 ist eine Dialysemembran und ein Verfahren zur Herstellung dieser cellulosischen Dialysemembran bekannt, bei dem eine oder mehrere Cuoxamcelluloselösungen und mindestens eine Dialkylaminoalkylcellulose als modifizierte Cellulose enthaltende Cuoxamcelluloselösung durch eine Spinndüse mit mindestens zwei getrennt gespeisten Schlitzen hindurchgeführt wird. Diese Polymerströme werden unmittelbar nach dem Austritt aus der Düse zusammengeführt und nach Durchlaufen einer Luftstrecke von höchstens dem 15 bis 500-fachen Abstand der Düsenschlitze voneinander in das Fällbad geleitet, in bekannter Weise gewaschen, getrocknet und aufgewickelt. Die auf der Blutseite angeordnete Celluloseschicht besteht aus der ganz oder teilweise modifizierten Cellulose, die antithrombogene Wirkstoffe chemisch gebunden enthält.

Nach der DE-C-35 24 596 werden Dialysemembranen für die Hämodialyse in Form von Flachfolien, Schlauchfolien oder Hohlfäden erhalten, deren mittlerer Substitutionsgrad der modifizierten Cellulose im Bereich von 0,02 bis 0,07 liegt. Unter dem mittleren Modifizierungsgrad der durch Substitution modifizierten Cellulose wird die mittlere Anzahl der Substituenten pro 1 Anhydridoglucoseeinheit der die Membran bildende Cellulose verstanden. Die Einstellung des gewünschten mittleren Substitutionsgrades erfolgt durch das Mischen von substituierter mit nicht-substituierter Cellulose, worauf hin dann diese Mischung auf übliche Weise versponnen wird.

Die DE-C-34 38 531 beschreibt ebenfalls modifizierte cellulosische Membranen, die aus Mischungen von unmodifizierter mit modifizierter Cellulose erhalten werden. Die cellulosische Membran kann nach den üblichen, in der Literatur bekannten Methoden hergestellt werden.

Aus der DE-A-35 24 596 ist bereits eine Dialysemembran mit verbesserter Biocompatibilität bekannt, die sich dadurch auszeichnet, daß der mittlere Substitutionsgrad einer modifizierten Cellulose 0,02 bis 0,07 beträgt. Vorzugsweise enthält die bekannte Dialysemembran aus modifizierter Cellulose solche modifizierte Cellulose, die eine durch die Formel

Cellulose-R'-X-Y

wiedergegebene Struktur aufweist, wobei

X für -NR''- und/oder

$$-\overset{+}{N}R''_2-$$

und/oder -S- und/oder -SO- und/oder $-SO_2-$ und/oder

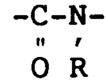

und/oder -CO-O- und/oder -O-

Y für -R und/oder $-NR_2$ und/oder $-Si(OR'')_3$ und/oder $-SO_3H$ und/oder -COOH und/oder $-PO_3H_2$ und/oder $-\overset{+}{N}HR_2$ bzw. deren Salze

R' für eine Alkylengruppe und/oder Cycloalkylengruppe und/oder Arylengruppe mit insgesamt 1 bis 25 C-Atomen

R'' für ein Wasserstoffatom oder R und

R für eine Alkylgruppe mit 1 bis 5 C-Atomen und/oder eine Cycloalkylgruppe und/oder Arylgruppe steht.

Diese bekannte Dialysemembran war bereits in der Lage, Blutgerinnung, Leucopenie und Komplementaktivierung in erheblichem Umfange zu reduzieren.

In der deutschen Patentanmeldung DE-A-37 23 897 sind Cellulosederivate mit der allgemeinen Formel

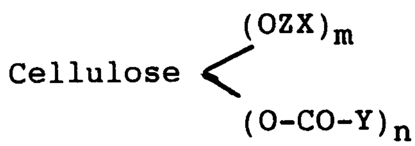

worin

-Z- einen gegebenenfalls substituierter Alkylen-, Alkenylen-, Alkinylen-, Cycloalkylen- oder Benzylen- oder Xylylenrest

X -H, $-NR_2$, $-\overset{+}{N}R_3$, -CN, -COOH, $-SO_3H$, $-PO(OR)_2$, $-CONR_2$ oder $-Si(OR)_3$ bedeutet,

wobei

R ein Wasserstoffatom oder eine Alkyl- oder Alkenylgruppe mit 1 bis 25 C-Atomen, Cycloalkyl-, Tolyl oder Phenylgruppe bedeutet

und

Y eine gegebenenfalls substituierte Alkyl-, Alkenyl-, Alkinylgruppe mit 1 bis 36 C-Atomen, eine Cycloalkylgruppe oder eine Phenyl-, Tolyl- oder Benzylgruppe oder ein

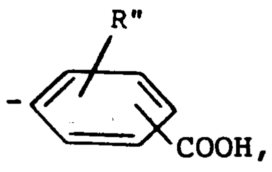

$-(CH_2)_r-COOH$,

$-(C_2H_3)-COOH$
$-(CH_2)_r-H$

oder (-CH=CH-COOH)Rest oder NH-R-Rest ist und R die gleiche Bedeutung wie oben hat

und

$r = 1 - 20$
$m = 0 - 2,5$
$n = 0,2$ bis $2,95$
mit der Maßgabe, daß bei $m = O$ $n \geq 1,55$ ist, wenn Y ein Alkyl-Rest mit 1 - 5 C-Atomen, ein $-(CH_2)_r-COOH$-Rest mit r = 0, 1 oder 2 oder ein Rest der Phthalsäure ist,

sowie der Polymerisationsgrad mehr als 400 beträgt und die herstellbar ist durch homogene Umsetzung in einem Gemisch von Dimethylacetamid und/oder N-Methylpyrrolidon mit LiCl nach Aktivierung des Celluloseausgangsproduktes ohne Anwesenheit von LiCl, deren Herstellung und deren Verwendung zu Membranen und Fasern beschrieben.

Bei der Hämodialyse mittels Membranen aus regenerierter Cellulose hat man neben anderen Phänomenen auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn Antikörper gegen den eindringenden Organismus vorhanden sind, kann komplementspezifisch durch den Komplex der Antikörper mit antigenen Strukturen der Fremdzellen aktiviert werden, anderenfalls erfolgt auf einem Alternativ-Weg durch besondere Oberflächenmerkmale der Fremdzellen die Komplement-Aktivierung. Das Komplement-System beruht auf einer Vielzahl von Plasma-Proteinen. Nach Aktivierung reagieren diese Proteine spezifisch in einer bestimmten Reihenfolge miteinander und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hämodialysemembranen aus regenerierter Cellulose über den alternativen Weg erfolgt. Objektiv festgestellt werden diese Komplement-Aktivierungen durch eine Bestimmung der Komplement-Fragmente $C_{3a}$ und $C_{5a}$.

In der EP-A-0 459 293 werden biokompatible Dialysemembranen für die Hämodialyse in Form von Flachfolien, Schlauchfolien oder Hohlfäden aus Polysaccharidethern mit einem Veretherungsgrad von 0,08 bis 2,6 beschrieben. Die gänzlich aus solchen Polysaccharidethern bestehenden Membranen werden in bekannter Weise durch Koagulation der wäßrigen Cuoxamlösungen oder von organischen Polysaccharidether-Lösungen gebildet.

In diesem Zusammenhang wird auf folgende Arbeiten hingewiesen: D.E. Chenoweth et al, Kidney International Vol. 24, Seiten 764 ff, 1983, und D.E. Chenoweth, Asaio-Journal Vol. 7, Seiten 44 ff, 1984.

Im Rahmen der vorliegenden Erfindung wurde die Komplement-Aktivierung anhand der Fragmente $C_{5a}$ beurteilt. Dazu wurden in vitro 300 ml heparinisiertes Blutplasma über einen Zeitraum von 4 Std. mit einem Plasmafluß von 100 ml/min durch einen Dialysator mit 1 $m^2$ effektiver Austauschfläche rezirkuliert. In dem Plasma wurden die $C_{5a}$-Fragmente mit Hilfe der RIA-Methode (Upjohn-Test) bestimmt. Die relative Komplement-Aktivierung für den jeweiligen Meßzeitpunkt wurde durch Bildung des Verhältnisses aus der Konzentration zum Zeitpunkt der Probenahme und dem Anfangswert in Prozent errechnet. Zur Bewertung wurde der Meßwert nach 4 Std. Rezierkulationszeit herangezogen. Flachmembranen werden mit heparinisiertem Blutplasma 3 Stunden inkubiert und anschließend die $C_{5a}$-Fragmente bestimmt.

Obwohl die klinische Bedeutung der Komplement-Akvitvierung noch nicht geklärt ist, ist man bestrebt, diese bei der Hämodialyse möglichst auszuschließen.

Cellulosische Membranen werden seit längerem für die Dialyse und Ultrafiltration verwendet und es besteht der Wunsch, solche cellulosischen Membranen zur Verfügung zu haben, die eine möglichst geringe Komplementaktivierung aufweisen. Insbesondere gilt dies für cellulosische Flachmembranen.

Bisher war es aber nicht oder nur unter aufwendigen Methoden möglich, cellullosische Flachmembran so zu behandeln, daß man später eine gut funktionsfähige, aber nur mit einer geringen Komplementaktivierung versehene cellulosische Membran erhält.

Es war daher Aufgabe der vorliegenden Erfindung, ein Verfahren zur Verfügung zu stellen, mit dem eine cellulosische Flachmembran beschichtet werden kann, und bei dem durch die Beschichtung eine Erhöhung der Biokompatibilität erfolgt.

Diese Aufgabe wird erfindungsgemäß dadurch gelöst, daß die Flachmembranen nach der Herstellung mit Celluloseethern (a) und/oder Celluloseestern (b) und/oder Cellulosecarbamaten (c) beschichtet werden,

deren Strukturen den Formeln

(a) 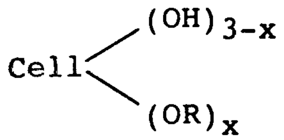

(b) 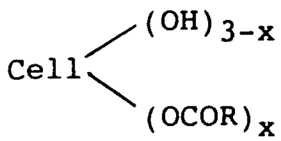

(c) 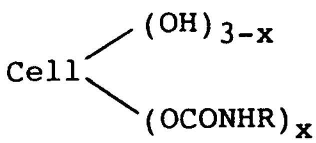

entsprechen, worin Cell das Gerüst des unmodifizierten Cellulosemoleküls ohne Hydroxylgruppen ist und x dem Modifizierungsgrad entspricht, der im Bereich von 0,002 bis 3 liegt und worin R ein (gegebenenfalls substituierter) Alkyl- und/oder Alkenyl- und/oder Aryl- und/oder Arylalkyl-Rest ist und die Kohlenstoffkette des Restes R 1 bis 36 C-Atome enthält und durch Heteroatome wie O, S, N unterbrochen sein kann und basische und/oder saure Gruppen wie $-NR'_2$, -COOR', und/oder $-SO_3R'$ bzw. deren Salze enthält, wobei R'=H oder R ist.

In den Unteransprüchen sind bevorzugte Ausführungsformen gekennzeichnet. So können durch Substitution in der Gruppe Eigenschaften des Membranmaterials beeinflußt werden. So ist der basische Celluloseether bevorzugt Dimethylamino-, Diethylamino-, Dipropylamino-, Diisopropylamino-, Dibutylamino- und/oder Diisobutylaminocellulose und der Modifizierungsgrad beträgt x = 0,01 bis 0,5.

Gemäß einer anderen bevorzugten Ausführungsform ist der Celluloseether Benzyl- und/oder Methylbenzylcellulose und der Modifizierungsgrad beträgt x = 0,005 bis 0,2.

Bevorzugt ist der Celluloseester Cellulosedodecenylsuccinat und/oder Cellulosehexadodecenylsuccinat und der Modifizierungsgrad beträgt x = 0,005 bis 0,5.

Für das Cellulosecarbamat sind Cellulosebutyl-, Celluloseoctadecyl-, Cellulosehexyl-, Cellulosecyclohexyl-, Cellulosephenyl- und/oder Cellulosetolylcarbamat und ein Modifizierungsgrad x = 0,01 bis 0,9 bevorzugt.

Die Erfindung wird so ausgeführt, daß die cellulosische Flachmembran mit einer Lösung des Cellulosederivates in Cuoxam beschichtet, koaguliert, gewaschen und getrocknet wird.

Es ist aber auch möglich, die cellulosische Flachmembran mit einer Lösung des Cellulosederivates in Dimethylacetamid/Lithiumchlorid oder N-Methylpyrrolidon/Lithiumchlorid zu beschichten, woraufhin dann koaguliert, gewaschen und getrocknet wird.

Gemäß einer weiteren Ausführungsform des erfindungsgemäßen Verfahrens kann man aber auch einen Celluloseether, -ester- oder -carbamat verwenden, der einen Modifizierungsgrad von über 1,2 aufweist und in einem organischen Lösungsmittel, wie Ketone, Ether, Ester, Alkohole, Glykole, Nitrile, Amide, Sulfoxide oder in einem Gemisch davon löslich ist.

Die cellulosische Flachmembran kann mit den in organischen Lösungsmittel gelösten Cellulosederivat beschichtet werden; das Lösungsmittel wird dann entsprechend durch Trocknen der behandelten Membran entfernt.

Anhand der nachfolgenden Beispiele wird die Erfindung erläutert:

**Beispiel 1**

Eine Cuprophan$^R$ -Flachmembran (40 x 16 cm) wurde mit einer Cuoxamlösung, die 5 Gew.% Benzylcellulose mit einem Modifizierungsgrad von x = 0,10 enthielt, mittels Auftragswalze gleichmäßig von beiden Seiten beschichtet. Die Membran wurde zunächst mit 1 %iger wäßriger Natriumhydroxid-Lösung behandelt, danach mit 1 %iger wäßriger Schwefelsäure-Lösung und mit vollentsalztem Wasser gewaschen, anschließend mit Glycerin behandelt, auf einen Rahmen aufgespannt und bei 25°C getrocknet. Im Vergleich zu einer unbeschichteten Membran ist die $C_{5a}$-Aktivierung der beschichteten Membran um 92% vermindert.

**Beispiel 2**

Eine Cuprophan$^R$-Flachmembran (40 x 16 cm) wurde mit einer Cuoxam-Lösung, die 5 Gew.% Cellulosedodecenylsuccinat mit einem Modifizierungsgrad von x = 0,10 enthielt, analog zu Beispiel 1 beschichtet und behandelt. Die beschichtete Membran wies im Vergleich zu einer unbeschichteten Membran eine um 95% geringere $C_{5a}$-Aktivierung auf.

**Beispiel 3**

Eine Cuprophan$^R$-Flachmembran (40 x 16 cm) wurde mit einer Lösung, bestehend aus 89 Gew.% Dimethylacetamid, 7 Gew.% Lithiumchlorid und 4 Gew.% Cellulosebutylcarbamat mit einem Modifizierungsgrad von x = 0,60 mittels Auftragswalze gleichmäßig von beiden Seiten beschichtet. Danach wurde die Membran in ein Wasserbad gelegt, 1 h gewässert, mit Glycerin behandelt, auf einen Rahmen aufgespannt und bei 25°C getrocknet. Gegenüber der unbeschichteten Membran zeigte die beschichtete Membran eine um 90% geringere $C_{5a}$-Aktivierung.

**Beispiel 4**

Eine Cuprophan$^R$-Flachmembran (40 x 16 cm) wurde mit einer Lösung, bestehend aus 94 Gew.%

Dimethylacetamid und 6 Gew.% Cellulose-2,6-butyrat von beiden Seiten gleichmäßig beschichtet, auf einen Rahmen aufgespannt und bei 60°C im Vakuumtrockenschrank getrocknet. Im Vergleich zu einer unbeschichteten Membran war die $C_{5a}$-Aktivierung der beschichteten Membran um 80% reduziert.

**Beispiel 5**

Eine cellulosische Flachmembran, hergestellt aus einer Cuoxamlösung mit 9 Gew.% Cellulose in der Lösung (Cuprophan $^R$; Hersteller: Akzo) wird auf einer drehbaren Vorrichtung aufgehängt und durch ein Beschichtungsbad, das eine Cuoxamlösung mit 10 Gew.% Diethylaminoethylcellulose enthält, welche mit 11%iger ammonialkalischer Lösung auf 0,2 Gew.% verdünnt wurde, mit einer Geschwindigkeit von 15 m/min hindurchgezogen und mit derselben Geschwindigkeit in ein Bad mit Waschsäure (verdünnte Schwefelsäure) eingeführt. Danach wurde die beschichtete Membran auf übliche Weise gewässert, anschließend mit Glycerin behandelt und zuletzt auf einen Feuchtigkeitsgehalt von 7% konditioniert.

Die so beschichtete Membran wies gegenüber einer nicht-beschichteten Membran eine um 70% geringere Komplement-Aktivierung auf.

**Beispiel 6**

Es wurde das gleiche Verfahren wie in Beispiel 5 angewendet, allerdings war die Ausgangsmembran aus einer Cuoxamlösung mit 8,5 Gew.% Cellulose in der Lösung hergestellt worden.

Die Komplement-Aktivierung gegenüber der unbehandelten Membran war um 75% geringer.

**Beispiel 7**

Es wurde vorgegangen wie in Beispiel 5, jedoch wurde die Cuoxamlösung, die die 10 Gew.% Diethylaminoethylcellulose enthielt, mit 5%iger ammonialkalischer Lösung verdünnt. Es wurde eine mit Diäthylaminoethylcellulose beschichtete cellulosische Membran erhalten, deren Komplement-Aktivierung gegenüber der unbehandelten Ausgangsmembran um 80% reduziert war.

**Patentansprüche**

1. Verfahren zur Verbesserung der Biokompatibilität von cellulosischen Flachmembranen, dadurch gekennzeichnet, daß die Flachmembranen nach der Herstellung mit Celluloseethern (a) und/oder Celluloseestern (b) und/oder Cellulosecarbamaten (c) beschichtet werden, deren Strukturen den Formeln

(a) 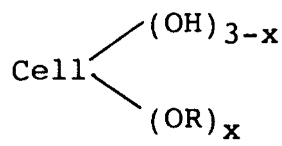

(b) 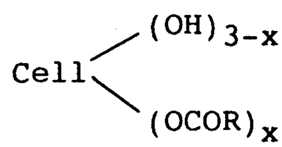

(c) 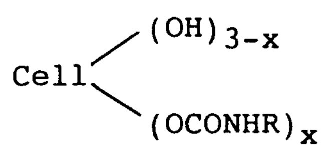

entsprechen, worin Cell das Gerüst des unmodifizierten Cellulosemoleküls ohne Hydroxylgruppen ist und x dem Modifizierungsgrad entspricht, der im Bereich von 0,002 bis 3 liegt, und worin R ein substituierter oder unsubstituierter Alkyl- und/oder Alkenyl- und/oder Aryl- und/oder Arylalkyl- Rest ist, wobei die Kohlenstoffkette des Restes R 1 bis 36 C-Atome enthält und durch Heteroatome wie O, S, N unterbrochen sein kann und basische und/oder saure Gruppen wie $-NR'_2$, -COOR', $-SO_3R'$ bzw. deren Salze enthält, wobei R'=H oder R ist.

2. Verfahren nach Anspruch 1, dadurch gekennzeichnet, daß der basische Celluloseether Dimethylamino-, Diethylamino-, Dipropylamino-, Diisopropylamino-, Dibutylamino-, Diisobutylaminocellulose ist und der Modifizierungsgrad x = 0,01 bis 0,5 beträgt.

3. Verfahren nach Anspruch 1, dadurch gekennzeichnet, daß der Celluloseether Benzyl- und/oder Methylbenzylcellulose ist und der Modifizierungsgrad x = 0,005 bis 0,2 beträgt.

4. Verfahren nach Anspruch 1, dadurch gekennzeichnet, daß der Celluloseester Cellulosedodecenyl- und/oder Cellulosehexadocenylsuccinat ist und der Modifizierungsgrad x = 0,005 bis 0,5 beträgt.

5. Verfahren nach Anspruch 1, dadurch gekennzeichnet, daß das Cellulosecarbamat Cellulosebutyl-, Celluloseoctadecyl-, Cellulosehexyl-, Cellulosecyclohexyl-, Cellulosephenyl- und/oder Cellulosetolylcarbamat ist und der Modifizierungegrad x = 0,01 bis 0,9 beträgt.

6. Verfahren nach einem oder mehreren der Ansprüche 1 bis 5, dadurch gekennzeichnet, daß die cellulosische Flachmembran mit einer Lösung des Cellulosederivates in Cuoxam beschichtet, koaguliert, gewaschen und getrocknet wird.

7. Verfahren nach einem oder mehreren der Ansprüche 1 bis 5, dadurch gekennzeichnet, daß die cellulosische Flachmembran mit einer Lösung des Cellulosederivates in Dimethylacetamid/Lithiumchlorid oder N-Methylpyrrolidon/Lithiumchlorid beschichtet, koaguliert, gewaschen und getrocknet wird.

8. Verfahren nach Anspruch 1, dadurch gekennzeichnet, daß der Celluloseether, -ester- oder -carbamat einen Modifizierungsgrad von über 1,2 aufweist und in einem organischem Lösungsmittel, wie Ketone, Ether, Ester, Alkohole, Glykole, Nitrile, Amide, Sulfoxide oder in einem Gemisch davon löslich sind.

9. Verfahren nach Anspruch 8, dadurch gekennzeichnet, daß die cellulosische Flachmembran mit dem im organischen Lösungsmittel gelösten Cellulosederivat beschichtet und das Lösungsmittel durch Trocknen der behandelten Membran entfernt wird.

**Claims**

1. Process for improving the biocompatibility of cellulosic flat membranes, characterised in that subsequent to their production the flat membranes are coated with cellulose ethers (a) and/or cellulose esters (b) and/or cellulose carbamates (c), the structures of which correspond to the formulae

```
               (OH)3-x
              /
(a)     Cell
              \
               (OR)x


               (OH)3-x
              /
(b)     Cell
              \
               (OCOR)x


               (OH)3-x
              /
(c)     Cell
              \
               (OCONHR)x
```

wherein Cell denotes the skeleton of the unmodified cellulose molecule without hydroxyl groups and x corresponds to the degree of modification, which lies in the range from 0.002 to 3, and wherein R is a substituted or non-substituted alkyl and/or alkenyl and/or aryl and/or arylalkyl residue, where the carbon chain of the residue R contains 1 to 36 C atoms and may be interrupted by heteroatoms such as O, S or N and contains basic and/or acid groups such as $-NR'_2$, -COOR', $-SO_3R'$ or salts thereof, R' being -H or R.

2. Process according to Claim 1, characterised in that the basic cellulose ether is dimethylamino cellulose, diethylamino cellulose, dipropylamino cellulose, diisopropylamino cellulose, dibutylamino cellulose or diisobutylamino cellulose and the degree of modification x amounts to between 0.01 and 0.5.

3. Process according to Claim 1, characterised in that the cellulose ether is benzyl cellulose and/or methylbenzyl cellulose and the degree of modification amounts to between 0.005 and 0.2.

4. Process according to Claim 1, characterised in that the cellulose ester is cellulose dodecenyl succinate and/or cellulose hexadocenyl succinate and the degree of modification x amounts to between 0.005 and 0.5.

5. Process according to Claim 1, characterised in that the cellulose carbamate is cellulose butyl carbamate, cellulose octadecyl carbamate, cellulose hexyl carbamate, cellulose cyclohexyl carbamate, cellulose phenyl carbamate and/or cellulose tolyl carbamate and the degree of modification x amounts to between 0.01 and 0.9.

6. Process according to one or more of Claims 1 to 5, characterised in that the cellulosic flat membrane is coated with a solution of the cellulose derivative in cuprammonium, is coagulated, washed and dried.

7. Process according to one or more of Claims 1 to 5, characterised in that the cellulosic flat membrane is coated with a solution of the cellulose derivative in dimethylacetamide/lithium chloride or N-methylpyrrolidone/lithium chloride, is coagulated, washed and dried.

8. Process according to Claim 1, characterised in that the cellulose ether, cellulose ester or cellulose carbamate has a degree of modification amounting to more than 1.2 and is soluble in an organic solvent such as ketones, ethers, esters, alcohols, glycols, nitriles, amides, sulphoxides or in a mixture thereof.

9. Process according to Claim 8, characterised in that the cellulosic flat membrane is coated with the cellulose derivative dissolved in the organic solvent and the solvent is removed by drying the treated membrane.

## Revendications

1. Procédé pour l'amélioration de la biocompatibilité de membranes plates cellulosiques, caractérisé en ce que les membranes plates, après préparation, sont enduites avec des éthers de cellulose (a) et/ou des esters de cellulose (b) et/ou des carbamates de cellulose (c) dont la structure correspond aux formules

(a) 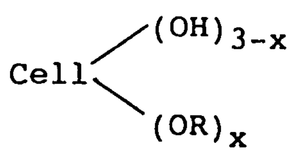

(b) 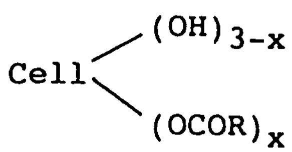

(c) 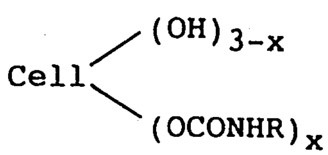

où *Cell* représente le squelette de la molécule de cellulose non modifiée sans les groupes hydroxyle et x correspond au taux de modification compris entre 0,002 et 3, et où R représente un résidu alkyle et/ou alcényle et/ou aryle et/ou arylalkyle substitués ou non, la chaîne carbonée du résidu R comportant de 1 à 36 atomes de carbone et pouvant être interrompue par des hétéroatomes tels que O, S ou N et pouvant contenir des groupes basiques et/ou acides tels que $-NR'_2$, $-COOR'$, $-SO_3R$ ou les sels correspondants, où R' = H ou R.

2. Procédé conforme à la revendication 1, caractérisé en ce que l'éther de cellulose basique est la diméthylaminocellulose, la diéthylaminocellulose, la dipropylaminocellulose, la diisopropylaminocellulose, la dibutylaminocellulose, la diisobutylaminocellulose et en ce que le taux de modification x = 0,01 à 0,5.

3. Procédé conforme à la revendication 1, caractérisé en ce que l'éther de cellulose est la benzylcellulose et/ou la méthylbenzylcellulose et en ce que le taux de modification x = 0,005 à 0,2.

4. Procédé conforme à la revendication 1, caractérisé en ce que l'ester de cellulose est le succinate de cellulose et de dodécényle et/ou le succinate de cellulose et d'hexadécényle et en ce que le taux de modification x = 0,005 à 0,5.

5. Procédé conforme à la revendication 1, caractérisé en ce que le carbamate de cellulose est le N-butylcarbamate de cellulose, le N-octadécylcarbamate de cellulose, le N-hexylcarbamate de cellulose, le N-cyclohexylcarbamate de cellulose, le N-phénylcarbamate de cellulose et/ou le N-tolylcarbamate de cellulose et en ce que le taux de modification x = 0,01 à 0,9.

6. Procédé conforme à une ou plusieurs des revendications 1 à 5, caractérisé en ce que la membrane plate cellulosique est enduite avec une solution du dérivé de cellulose dans du cuoxam, est soumise à une coagulation, puis lavée et séchée.

7. Procédé conforme à une ou plusieurs des revendications 1 à 5, caractérisé en ce que la membrane plate cellulosique est enduite avec une solution du dérivé de cellulose dans un mélange diméthylacétamide/chlorure de lithium ou un mélange N-méthylpyrrolidone/chlorure de lithium, est soumise à une coagulation, puis lavée et séchée.

8. Procédé conforme à la revendication 1, caractérisé en ce que l'éther de cellulose, l'ester de cellulose ou le carbamate de cellulose ont un taux de modification supérieur à 1,2, et en ce qu'ils sont solubles dans un solvant organique tel que les cétones, éthers, esters, alcools, glycols, nitriles, amides, sulfoxydes ou dans des mélanges les contenant.

9. Procédé conforme à la revendication 8, caractérisé en ce que la membrane plate cellulosique est enduite avec le dérivé de cellulose dissous dans le solvant organique et en ce que le solvant est éliminé par séchage de la membrane traitée.